**Europäisches Patentamt**

**European Patent Office**

**Office européen des brevets**

(19)

(11) Numéro de publication: **0 150 667**
A2

# (12) DEMANDE DE BREVET EUROPEEN

(21) Numéro de dépôt: **84810569.8**

(22) Date de dépôt: **21.11.84**

(51) Int. Cl.⁴: **E 06 B 3/66**, G 02 B 26/02

(30) Priorité: **25.11.83 CH 6315/83**

(43) Date de publication de la demande: **07.08.85**
**Bulletin 85/32**

(84) Etats contractants désignés: **AT BE CH DE FR GB IT LI
LU NL SE**

(71) Demandeur: **Collinucci, Luigi, 12 rue Crespin,
CH-1206 Geneve (CH)**

(72) Inventeur: **Collinucci, Luifi, 12 rue Crespin,
CH-1206 Geneve (CH)**
Inventeur: **Harmer, Alan Lewis, 74 chemin de la
Mère-Vole, CH-1228 Plan Les Ouates (CH)**

(74) Mandataire: **Dousse, Blasco et al, 7, route de Drize,
CH-1227 Carouge/Genève (CH)**

(54) **Vitrage à transmission variable de lumière.**

(57) Ce vitrage comprend un polariseur (2) et un analyseur (3) formé chacun de n respectivement n' groupes de $k_1$ à $k_k$ respectivement $k'_1$ à $k'_k$ bandes de même largeur dont les plans de polarisation des bandes successives varient d'un même angle $\Delta\varphi < 90°$ de 0° à 90° et de 90° à 180°, de sorte que les bandes homologues de chaque groupe ont des plans de polarisation parallèles. Un mécanisme (4, 5) permet de déplacer l'analyseur parallèlement à son plan et perpendiculairement à l'axe longitudinal des bandes k' de manière à varier la transmission de lumière entre une position où les bandes du polariseur et de l'analyseur qui se font face ont des plans de polarisation parallèles correspondant à une transmission maximum et une position où ces bandes ont des plans de polarisation orthogonaux avec une transmission pratiquement nulle.

EP 0 150 667 A2

TITRE ... voir page de garde

VITRAGE A TRANSMISSION VARIABLE DE LUMIERE ET PROCEDE DE

FABRICATION D'UN POLARISEUR ET D'UN ANALYSEUR

DESTINES A CE VITRAGE

L'invention se rapporte à un vitrage à transmission variable de lumière comprenant un polariseur et un analyseur dichroïques situés dans deux plans parallèles, chacun d'eux comprenant plusieurs groupes de bandes parallèles rectilignes de même largeur présentant des plans de polarisation orthogonaux dont la périodicité correspond à la moitié de la largeur de chacun de ces groupes, des moyens pour déplacer relativement ces analyseur et polariseur parallèlement à leurs plans respectifs et perpendiculairement au sens longitudinal desdites bandes entre deux positions limites correspondant au moins à la demi- largeur de l'un desdits groupes pour varier la transmission de lumière en fonction des positions relatives desdites bandes et des moyens pour créer une transmission intermédiaire de la lumière entre lesdites positions limites.

On a déjà proposé, notamment dans le brevet US-A-2.302.507. des vitrages à transmission variable de lumière comprenant un polariseur et un analyseur dichroïques parallèles l'un à l'autre et formé chacun de façon identique de bandes parallèles de même largeur dont les plans de polarisation des bandes successives sont orthogonaux. Lorsque les bandes du polariseur et de l'analyseur dont les plans de polarisation sont parallèles, sont placés l'une en face de l'autre, la lumière perpendiculaire aux plans respectifs de ce polariseur et de cet analyseur est transmise avec une intensité maximum. Lorsque les bandes du polariseur et de l'analyseur sont décalées d'une largeur de bande pour que les bandes qui se font face présentent des plans de polarisation orthogonaux, la transmission de cette même lumière est pratiquement nulle.

Pour éviter qu'entre ces deux positions limites le vitrage ne transmette la lumière que le long de bandes plus ou moins larges alternant avec des bandes noires correspondant à la superposition partielle des bandes du polariseur et de l'analyseur dont les plans de polarisation sont orthogonaux, on a proposé dans ce document de recouvrir les faces respectives de chaque bande du polariseur et de l'analyseur qui se trouvent dans l'espace commun qui les sépare, d'un retardeur d'ondes constitué par des bandes à biréfringence variable disposées avec leurs axes optiques correspondants sensiblement parallèles. Chaque bande de retard d'ondes de l'analyseur est positionnée par rapport à ses axes optiques de manière à communiquer à une composante d'un faisceau de lumière polarisée qui leur est transmis par les bandes du polariseur, un retard relatif par rapport à l'autre composante, variant progressivement d'un bord à l'autre de la bande d'une demi longueur d'onde. Les bandes peuvent être disposées sur le polariseur et l'analyseur de manière que leurs effets s'ajoutent ou se retranchent de manière qu'en décalant les bandes on obtienne un retard maximum d'une longueur d'onde.

La difficulté essentielle de la solution proposée est la réalisation de ces bandes à biréfringence variable. Quand bien même cette idée date de quarante ans déjà, de tels vitrages ne sont pas disponibles sur le marché. En outre, une telle solution nécessite la présence de quatre couches transparentes, ce qui augmente très considérablement le prix du vitrage.

L'idée d'obtenir une transmission variable de la lumière à travers un vitrage a également été décrite dans le DE-A-2.836.861. A cet effet, il est proposé de former des bandes parallèles à transparence variable sur deux feuilles situées dans deux plans parallèles adjacents de sorte qu'en déplaçant relativement ces feuilles dans leurs plans selon une direction perpendiculaire à la direction desdites bandes, la transparence globale du vitrage varie de façon continue. Il est expliqué dans ce document que lorsque les plans de polarisation d'un polariseur et d'un analyseur sont parallèles la transmission de lumière est maximum alors qu'elle est minimum lorsque ces plans sont perpendiculaires. Il est précisé en outre que les zones transparentes et non transparentes peuvent être obtenues par des zones à direction de polarisation différentes. Or, comme on l'a expliqué au début de ce document, les zones à transparence maximum sont celles dans lesquelles les directions de polarisation sont parallèles et les zones opaques sont celles dans lesquelles ces directions sont perpendiculaires. Il résulte de cet-

- 3 -                    0150667

te alternance de zones transparentes et opaques que la variation de transmission de lumière n'est pas uniforme sur toute la surface du vitrage et qu'elle résulte en fait d'une répartition entre la largeur variable des bandes transparentes et opaques alternées. Le vitrage apparaît donc comme une surface zébrée. Il s'agit donc d'une solution semblable à celle décrite dans le US-A-2.302.507 susmentionnée sans l'utilisation des retardeurs d'ondes.

Le but de la présente invention est de remédier au moins en partie aux inconvénients des solutions proposées.

A cet effet, cette invention a tout d'abord pour objet un vitrage à transmission variable de lumière selon la revendication 1.

Cette invention a ensuite pour objet un procédé de fabrication d'un polariseur et d'un analyseur destinés à ce vitrage, tel que défini par la revendication 2.

Les avantages du vitrage, objet de l'invention, résident essentiellement dans le fait que la transmission variable de lumière est obtenue uniquement par deux feuilles dichroïques, alors que jusqu'ici il fallait au moins une feuille intermédiaire pour obtenir une transsition progressive entre la transmission maximum et la transmission minimum sans apparition de stries à la surface du vitrage suivant les positions respectives du polariseur et de l'analyseur. Un autre avantage réside dans le mode de fabrication des feuilles du polariseur et de l'analyseur qui utilise une technologie de fabrication de matériaux stratifiés qui permet de produire ces feuilles à l'aide d'une technique économiquement intéressante.

Le dessin annexé illustre schématiquement et à titre d'exemple, une forme d'exécution du dispositif objet de l'invention.

La fig. 1 est un schéma explicatif représentant une coupe transversale à travers le dispositif.

La fig. 2 est une vue en coupe du mode de découpage du stratifié utilisé pour réaliser le polariseur et l'analyseur destinés à ce dispositif.

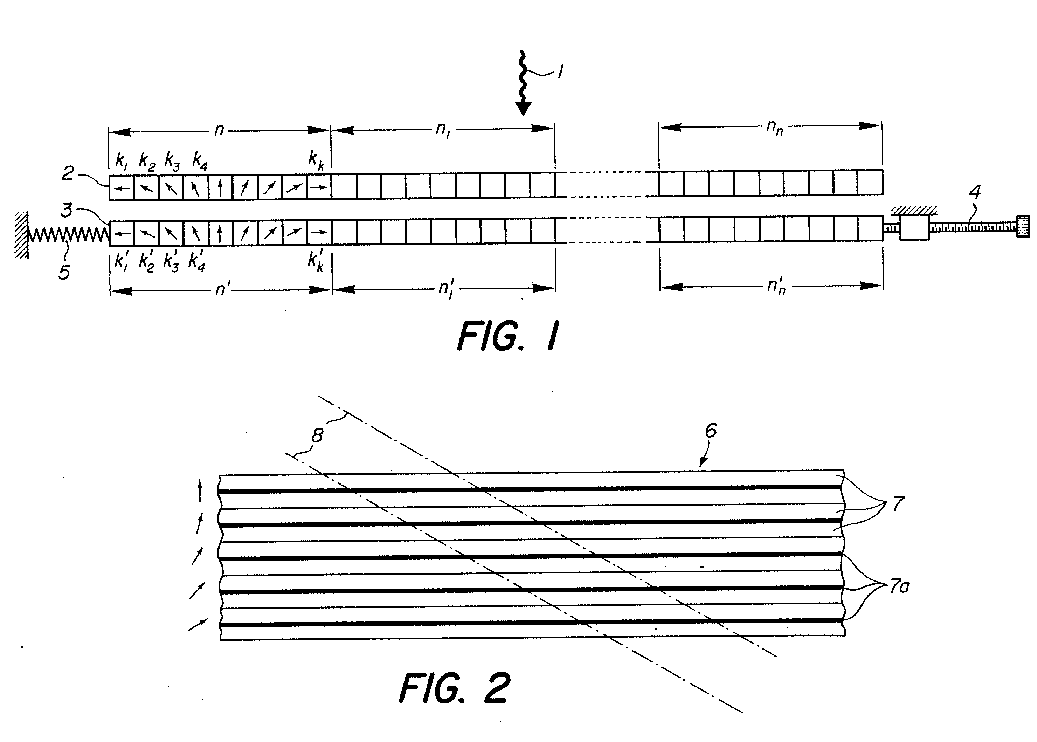

Si l'on se reporte tout d'abord au schéma explicatif de la fig. 1, la flèche représente la direction du faisceau de lumière incident 1 venant de l'extérieur et destiné à traverser le dispositif avec un taux de transmission variable.

Ce faisceau lumineux 1 rencontre tout d'abord un polariseur 2 qui est disposé parallèlement à un analyseur 3. Ce polaryseur 2 et cet analyseur 3 ont exactement la même structure, de sorte que l'on se limitera à ne décrire que la structure de l'un de ces éléments.

Comme illustré par la coupe transversale de cette fig. 1, chaque élément 2 et 3 est divisé en une pluralité de bandes parallèles $k_1$ à $k_k$ réunies en plusieurs groupes $n_1$ à $n_n$. Chaque groupe n est constitué d'un nombre identique de bandes parallèles k et toutes les bandes ont la même largeur. Dans chaque groupe, les bandes parallèles $k_1$ à $k_k$ ont des plans de polarisation respectifs qui varient d'un angle $\Delta \varphi$ entre 0° pour la première bande $k_1$ à 180° pour la dernière bande $k_k$ du même groupe. Les flèches qui représentent l'orientation des plans de polarisation dans les figs 1 et 2 sont normalement contenues dans les plans respectifs parallèles du polariseur et de l'analyseur, c'est-à-dire dans des plans perpendiculaires au plan du dessin. La valeur de l'angle $\Delta \varphi$ correspond au nombre du bandes entre $k_1$ et $k_k$. Plus ce nombre est important, plus l'angle est faible et plus les bandes sont étroites. La largeur de chaque groupe correspond au double de la valeur maximum admise pour déplacer un élément 2 par rapport à l'autre 3. Par conséquent, toutes les bandes homologues des différents groupes ont des plans de polarisation parallèles. Etant donné que le polariseur 2 et l'analyseur 3 sont identiques, lorsque les groupes $n_1$ à $n_n$ du polariseur sont en face des groupes $n_1$ à $n_n$, les bandes $k_1$ à $k_k$ du polariseur sont exactement en face des bandes $k_1$ à $k_k$ de l'analyseur, de sorte que les bandes du polariseur sont en face des bandes homologues de l'analyseur et que toutes les bandes qui se font face ont des plans de polarisation parallèles. Le faisceau de lumière incidente 1 est donc transmis dans ces conditions avec l'intensité maximum.

L'un, 3, des éléments 2 et 3 est monté coulissant parallèlement à son plan et perpendiculairement aux axes longitudinaux des bandes k. Des moyens sont prévus pour faire coulisser cet élément 3. Ils sont représentés symboliquement par une vis 4 et un ressort de rappel 5.

Si à l'aide de ce mécanisme 4 et 5 on déplace l'analyseur 3 d'une longueur correspondant à une largeur de bande k, les bandes

$k_1$ à $k_k$ de chaque groupe $n_1$ à $n_n$ de l'analyseur sont décalées d'un pas par rapport aux bandes homologues du polariseur. La lumière polarisée par chaque bande du polariseur est décalée d'un angle $\Delta\varphi$ par rapport au plan de polarisation de l'analyseur de sorte que l'intensité de la lumière transmise est réduite d'un facteur correspondant à cet angle $\Delta\varphi$. Ainsi, chaque fois que l'on déplace l'analyseur d'un pas supplémentaire équivalent à une largeur de bande k, on augmente la valeur de l'angle $\Delta\varphi$ entre le plan de polarisation des bandes k du polariseur et celle k' de l'analyseur qui se trouvent en face, réduisant proportionnellement la transmission de lumière. Lorsque le déplacement est équivalent aux $k_k/2$ bandes d'un groupe, l'angle $\Delta\varphi$ entre les plans de polarisation respectifs des bandes k' de l'analyseur et les plans de polarisation respectifs des bande k du polariseur est de 90°, ce qui correspond à une transmission de lumière pratiquement nulle.

La fig. 2 illustre un procédé selon l'invention pour réaliser au moins un groupe n ou n' de $k_1$ à $k_k$ ou $k'_1$ à $k'_k$ bandes destiné à former le polariseur ou l'analyseur du dispositif à transmission variable de lumière décrit ci-dessus.

Ce procédé consiste à réaliser un stratifié 6 constitué par une pluralité de feuilles 7 de Polaroïd (marque déposée) HN42.
On pourrait aussi choisir des feuilles Polaroïd d'autres types, par exemple HN22, HN32, HN38 etc.

Ces feuilles sont découpées à la dimension désirées en changeant l'orientation du plan de polarisation d'un angle $\Delta\varphi$ donné inférieur à 90°. Etant donné que les feuilles 7 ont une épaisseur donnée de l'ordre de 0,3 mm, plus l'angle $\Delta\varphi$ est grand, plus la largeur des groupes n et n' sera faible et plus la transition entre la transmission maximum et minimum sera rapide. Si l'on suppose que l'angle $\Delta\varphi$ est de 10°, on peut réaliser un empilement de feuilles de 0° à 180° ou à 360°, ce qui donne alors une épaisseur de 12 mm environ, correspondant à la largeur de deux groupes n ou n' de 36 bandes k ou k'. Ces feuilles sont collées les unes aux autres pour former un stratifié, par exemple par collage à l'aide d'une résine époxy. Alternativement, on pourrait aussi assembler ces feuilles par soudage par ultrasons ou à l'aide d'un solvant qui dissout le dos de chaque feuille. Etant donné que la couche polarisante 7a de chaque feuille est superficielle, une fois le stratifié formé, on le découpe en feuilles selon le plan 8, formant un angle de 45° par exemple avec celui des feuilles 7 et indiqué en traits mixtes par la fig. 2 et on polit les faces de cette feuille pour lui rendre sa transparence. Lorsque l'on place l'une en face de l'autre deux feuilles ainsi découpées dans le stratifié de la fig. 2 avec les bandes présentant des plans de polarisation parallèles l'une en face de l'autre, on obtient la transmission maximum. Avec un décalage des bandes mettant vis-à-vis des bandes dont les plans de polarisation sont orthogonaux, la transmission est pratiquement nulle. On peut cependant relever qu'au-delà d'un certain angle d'observation fonction de l'inclinaison du plan 8, il est possible de voir à travers le dispositif sans traverser les couches polarisantes de sorte qu'un tel vitrage ait une polarisation directionnelle pour l'observateur. Ceci n'est pas un désavantage dans le cas d'un vitrage, étant donné que cette propriété peut être mise à profit pour produire une transmission différentielle suivant la source de lumière. C'est ainsi que l'on peut supprimer la transmission de la lumière incidente venant du ciel tout en permettant de voir en direction du sol à l'instar de ce qui se produit avec les stores à lamelles pour autant que les axes longitudinaux des bandes k soient horizontaux.

Bien entendu, un tel procédé, et notamment la fabrication du stratifié, peut être réalisé en continu en utilisant des bandes. L'épaisseur de la couche définit la largeur du polariseur ou de l'analyseur. Dans le cas d'un vitrage, il est possible de limiter cette largeur à un ou plusieurs groupes n ou n', étant donné que ce polariseur et cet analyseur seront obtenus en collant côte-à-côte autant de groupes n et n' qu'il est nécessaire sur les faces internes d'un double vitrage, constituant le support du polariseur et de l'analyseur. Dans un tel cas, l'une des vitres du double vitrage est montée sur un châssis susceptible de coulisser transversalement par rapport à la direction longitudinale des bandes k et k' formant les groupes n et n' du polariseur et de l'analyseur.

Les applications de l'invention décrite sont nombreuses en particulier dans le domaine du vitrage aussi bien pour le bâtiment que pour les véhicules, notamment pour les vitrages des cabines de pilotage d'avions, pour les fenêtres que pour les vitrines, pour les cloisons que pour les portes vitrées etc.

- 8 -                    0150667

## R E V E N D I C A T I O N S

1. Vitrage à transmission variable de lumière comprenant un polariseur et un analyseur dichroïques situés dans deux plans parallèles, chacun d'eux comprenant plusieurs groupes de bandes parallèles rectilignes de même largeur présentant des plans de polarisation orthogonaux dont la périodicité correspond à la moitié de la largeur de chacun de ces groupes, des moyens pour déplacer relativement ces analyseur et polariseur parallèlement à leurs plans respectifs et perpendiculairement au sens longitudinal desdites bandes entre deux positions limites correspondant au moins à la demi-largeur de l'un desdits groupes pour varier la transmission de lumière en fonction des positions relatives desdites bandes et des moyens pour créer une transmission intermédiaire de la lumière entre lesdites positions limites, caractérisé par le fait que chacun desdits groupes du polariseur et de l'analyseur comporte une pluralité de bandes dont les vecteurs de polarisation respectifs varient successivement d'un même angle $\Delta \varphi < 90°$ de 0° à 90° et de 90° à 180°, de sorte que toutes les bandes homologues des groupes respectifs présentent des vecteurs de polarisation parallèles.

2. Procédé de fabrication d'un polariseur et d'un analyseur destinés au vitrage selon la revendication 1, caractérisé par le fait que l'on forme un stratifié à l'aide d'une pluralité de feuilles polarisées présentant successivement des plans de polarisation respectifs variant dudit angle $\Delta \varphi < 90°$, le nombre de feuilles ainsi empilées correspondant au nombre de fois que la valeur dudit angle $\Delta \varphi$ est comprise dans 180° et on découpe ensuite dans ce stratifié des feuilles d'épaisseur désirée selon des plans respectifs parallèles, obliques par rapport au plan des couches formant le stratifié.

FIG. 1

FIG. 2